# EUROPEAN PATENT SPECIFICATION

(11) **EP 1 943 418 B1**
(45) Date of publication and mention of the grant of the patent: **24.03.2010**
(21) Application number: 06812703.4
(22) Date of filing: 24.10.2006
(51) Int. Cl.: F02B 55/00

(54) **ROTARY PISTON ENGINE**
DREHKOLBENMOTOR
MOTEUR A PISTONS ROTATIFS

(30) Priority: 02.11.2005 NL 1030336
(43) Date of publication of application: 16.07.2008
(73) Proprietor: Freedom Motors Nederland B.V., 7391 GR Twello (NL)
(72) Inventor: OVERMARS, Antonius, Johannes, Maria, NL-7391 GR Twello (NL)
(74) Representative: Dokter, Hendrik Daniel
(86) International application number: PCT/NL2006/000533
(87) International publication number: WO 2007/053006

(56) References cited:
- GB-A- 1 180 419
- US-A- 3 180 323
- US-A- 6 146 120
- US-B1- 6 325 603

## Description

The invention relates to a rotary piston engine, comprising
- a housing with a wall which is closed at a first end by a first cover and which is closed at an opposite second end by a second cover, wherein a chamber is formed by the wall, the first and the second cover, wherein in a cross-section through.the chamber the inner side of the wall has an epitrochoid form,
- a rotor which is rotatable in the chamber and which in a view in axial direction has the form of an equilateral triangle with convex sides, wherein the apexes are in sealing contact with the inner wall of the housing, in which rotor a cylindrical cavity is formed,
- a rotatable motor shaft extending through the housing and the rotor and an eccentric which is fixedly connected to this motor shaft and which is accommodated in the cavity in the rotor in engagement with the rotor,
- wherein in each of the first and the second cover an inlet channel extending via the rotor and the wall and debouching in the chamber is formed for a cooling medium for cooling at least the motor shaft, the eccentric, the rotor and the housing.

In such a rotary piston engine the rotor forms a rotating piston which performs a rotation about its own centre as well as about the centre of the motor shaft, wherein the apexes of the rotor move along the wall of the chamber. For this purpose the chamber is divided by the three side surfaces of the rotor into four compartments displacing a determined distance along the wall which are designated successively as inlet chamber, compression chamber, combustion chamber and outlet chamber. Air and fuel are admitted into the inlet chamber, which is bounded by the wall of the housing and a first side surface of the piston, for a period in which this inlet chamber becomes larger. As soon as the inlet chamber no longer increases in size, the air and fuel feed is closed and the space which is then bounded by the wall of the housing and the first side surface of the piston forms a compression chamber. Air and fuel are compressed in this compression chamber for a period in which this compression chamber becomes smaller. As soon as the compression chamber no longer decreases in size, the air-fuel mixture is made to ignite, or in any case ignites, and the space which is then bounded by the wall of the housing and the first side surface of the piston forms a combustion chamber. Combustion gases expand in this combustion chamber which drive the rotor for a period in which this combustion chamber becomes larger. As soon as the combustion chamber no longer increases in size, the space then bounded by the wall of the housing and the first side surface of the piston forms an outlet chamber. From this outlet chamber the combustion gases are exhausted via an outlet in the wall for a period in which the outlet chamber becomes smaller. As soon as the outlet chamber no longer decreases in size, the piston has completed one revolution, and the space then bounded by the wall of the housing and the first side surface of the piston once again forms an outlet chamber, whereafter the above described cycle is repeated. The second and third side surfaces of the piston following the first side surface likewise run through this cycle.

Such a rotary piston engine is known from the American patent no. 6,642,942.

For the purpose of cooling the motor shaft, the eccentric, the rotor and the housing in the known rotary piston engine the cooling medium is admitted into the chamber successively via inlet openings in the side of respectively the first and second cover, outlet slots in the sides of the first and the second cover which are directed toward the chamber, channels in the rotor, inlet slots in the sides of the first and the second cover which are directed toward the chamber, channels in the first and second cover, channels in the wall and outlet openings in the wall. In order to enhance cooling of the rotor body, heat discharge bodies with cooling fins are arranged therein. An air-fuel mixture is used as cooling medium in order to achieve a sufficiently large cooling capacity.

It is perceived as a drawback of the known rotary piston engine that the fuel consumption thereof is relatively high. Due to the essential use of an air-fuel mixture as cooling medium, it is practically impossible to provide the known rotary piston engine with means for relatively energy-saving, direct fuel injection.

Another drawback is that the time for which the cooling medium remains in the rotor body is relatively short, as a result of which the motor shaft, the eccentric and the rotor body can only be cooled to a limited extent, which increases wear and thereby limits the lifespan of the rotary piston engine.

It is an object of the invention to provide a rotary piston engine which is in principle suitable to be adapted for direct fuel injection.

It is a further object to provide such a rotary piston engine which is adapted to cool the components of the engine in efficient manner, in particular the motor shaft and the rotor.

These objectives are achieved, and other advantages realized, with a rotary piston engine of the type specified in the preamble, wherein according to the invention the eccentric is assembled from a first part through which the cooling medium can pass and, separated over an axial distance therefrom, a second part through which the cooling medium can pass, and the cylindrical cavity in the rotor is assembled from a first part and a second part separated over an axial distance therefrom, wherein the first and the second part of the eccentric are accommodated in engagement with the rotor in respectively the first and the second part of the cavity in the rotor, wherein the outer periphery of the first and the second part of the eccentric corresponds to the inner periphery of respectively the first and the second part of the cavity.

In such a rotary piston engine a cooling medium has access, via the inlet channels in respectively the first and the second cover and the first and second part of the eccentric allowing passage, to the space between this first and second part of the eccentric and the interior of the rotor, as a result of which the eccentric, the motor shaft and the rotor are in direct contact with the cooling medium for a relatively long time.

In order to enhance transport of the cooling medium through the first and second part of the eccentric, this first and second part are provided in one embodiment with blades for transporting the cooling medium.

The inlet channel in the side directed toward the chamber of respectively the first and the second cover preferably has a slot which extends around the motor shaft over an arc length which amounts to at least 135°, and more preferably to at least 180°.

A slot with such a large arc length runs round a large part of the motor shaft extending through the first and the second cover, and enables a high flow rate of cooling medium to the space formed by the first and the second cover and the side of the rotor directed toward this cover.

In an advantageous embodiment of a rotary piston engine according to the invention at least one of the first and the second cover is assembled from a first part obtained by casting and a plate-like second part, wherein the second part forms the side which is directed toward the chamber and in which the above mentioned slot is arranged.

The second part is preferably manufactured here from a second material that is harder than the first material from which the first part is manufactured.

Because the first part comes into mechanical contact with the rotor, it/this latter is subject to relatively heavy wear, which is prevented if this first part is manufactured from a relatively hard material.

In a rotary piston engine in which the first part is manufactured from for instance cast aluminium, the second part is manufactured from for instance steel.

In an embodiment of a rotary piston engine with an assembled cover according to the invention provided with a toothed wheel which co-acts with an inner toothing present for this purpose in the rotor, the toothed wheel is connected by a welded connection to the second part of the assembled cover.

A welded connection has the advantage over a prior art connection with nuts and bolts in that it has a lower weight, which contributes toward the efficiency of the engine, and is moreover simpler and cheaper to produce.

Furthermore, a cover provided with a toothed wheel connected by a welded connection is exceptionally compact, whereby a first chamber with such a cover can be combined in relatively simple manner with one or more subsequent chambers having such a cover, wherein a rotary piston engine is created with two or more chambers, each having its own rotor and a shared motor shaft.

In an embodiment in which the advantages of the invention are utilized in high measure the rotary piston engine is provided with inlet means for direct admittance of fuel into the chamber, and the cooling medium is air.

In an embodiment of a rotary piston engine provided with inlet means for direct admittance of fuel each of the surfaces of the rotor directed toward the wall has a recess extending substantially from an apex of the rotor in peripheral direction over half the length of this surface.

In the period in which the side surface of the rotor and the wall of the housing form the combustion chamber such a recess forms part of this combustion chamber. Known is a recess extending substantially from an apex of the rotor in peripheral direction over almost the whole length of this surface. The recess over half the rotor surface according to the invention results in the combustion of the admitted fuel being highly localized. A highly localized combustion, which is referred to as "lean burn", contributes toward increasing the efficiency of the engine.

The invention further relates to an assembled rotary piston engine, wherein an above specified rotary piston engine with one rotor is coupled to at least a subsequent above specified rotary piston engine with one rotor, wherein the motor shaft is a shared motor shaft extending through the respective housing and the respective rotor of each of the respective rotary piston engines.

Available in a rotary piston engine according to the invention is a symmetrical and central air cooling for the rotor, the eccentric and the motor shaft. The cooling of the motor is optimized still further by a per se known liquid cooling via channels arranged for this purpose in the wall and the covers of the housing.

The invention will be elucidated hereinbelow on the basis of an exemplary embodiment and with reference to the drawings.

In the drawings
Fig. 1 shows a perspective view of an embodiment of a rotary piston engine according to the invention,
Fig. 2 shows the rotary piston engine of fig. 1 wherein one cover has been removed,
Fig. 3 is an exploded view of the parts of the housing of the rotary piston engine shown in fig. 1,
Fig. 4 is a perspective view of the motor shaft of the rotary piston engine shown in fig. 1,
Fig. 5 is a perspective view of the rotor of the rotary piston engine shown in fig. 1,
Fig. 6 is a cut-away view of the rotor shown in fig. 5,
Fig. 7 is a cut-away view in a first perspective of the rotary piston engine shown in fig. 1, and
Fig. 8 shows the rotary piston engine of fig. 7 in a second perspective.

Corresponding components are designated in the figures with the same reference numerals.

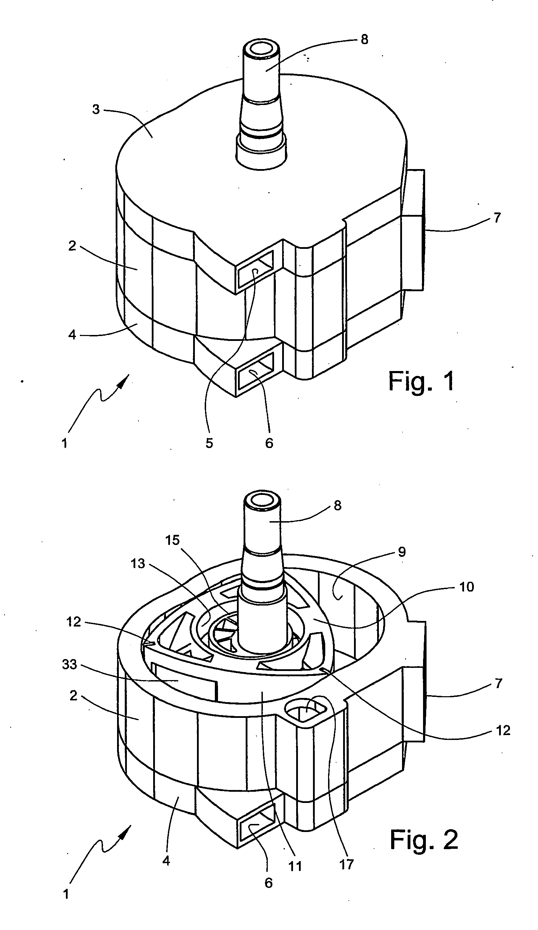

Fig. 1 shows a rotary.piston engine 1 which comprises a housing with a wall 2 which is closed at a first end by a first cover 3 and is closed at an opposite second end by a second cover 4. A chamber is formed by wall 2, first cover 3 and second cover 4. Formed in first cover 3 and second cover 4 and in wall 2 (shown in fig. 2, 7 and 8) are inlet channels 5, 21, 17; 6, 22, 18 for a cooling medium, and an outlet channel 7 for combustion gases is formed in wall 2. The figure further shows a motor shaft 8 which is bearing-mounted in the housing.

Fig. 2 shows the rotary suction engine of fig. 1 in a situation where first cover 3 is removed, wherein the epitrochoid form of the inner side 9 of wall 2 can be seen. Further shown are a rotor 10 which, in a view in axial direction, is an equilateral triangle with convex sides 11, wherein the apexes 12 provided with seals (not shown) are in sealing contact with inner wall 9 of the housing. Formed in rotor 10 is a first cylindrical part 13 of a cavity in which a first part 15 of an eccentric connected fixedly to motor shaft 8 is accommodated in engagement with rotor 11. The figure further shows a part 17 of a channel for the cooling medium which is formed in wall 2 and which is connected to inlet channel 5 in first cover 3.

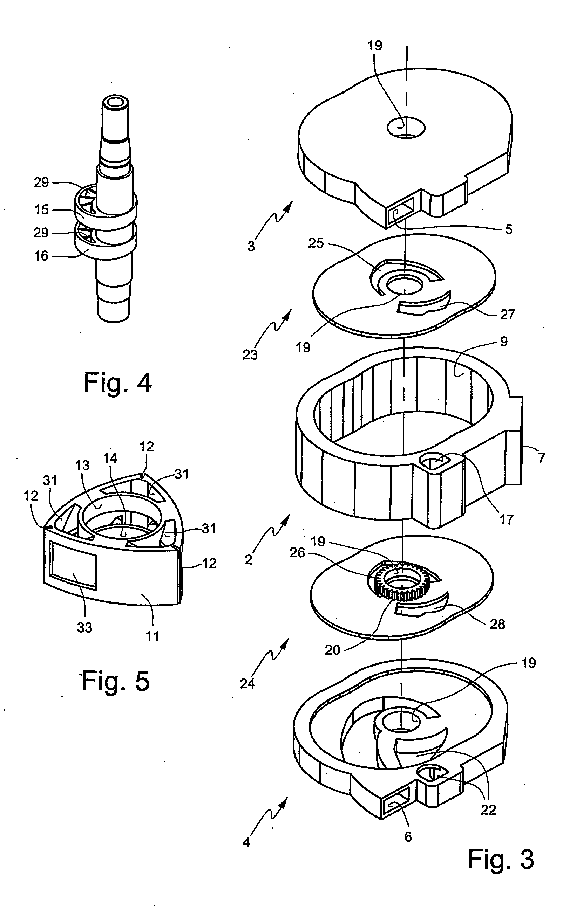

Fig. 3 shows successively from the top downward a first part 3, cast from aluminium, of the first cover with a bore 19 for shaft 8, a hard-steel plate 23 fitting into first part 3 of the cover, wall 2, a hard-steel plate 24 and a first part 4, cast from aluminium, of the second cover into which plate 24 fits.

Formed in plate 23 is a first slot 25 which forms the mouth of inlet channel 5 in cover part 3. In the shown embodiment slot,25 extends around bore 19 for motor shaft 8 over an arc length amounting to more than 180°. Formed in plate 23 is a second slot 27 which connects to the part 17 of the channel for the cooling medium formed in wall 2.

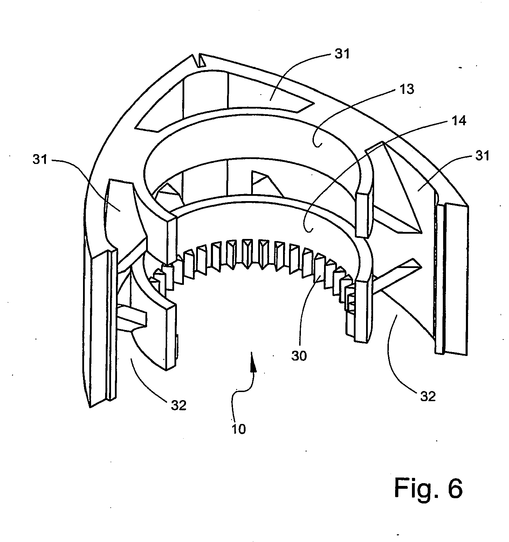

A first slot 26 which forms the mouth of inlet channel 6 in cover part 4 is formed in plate 24. In the shown embodiment slot 26 extends around bore 19 for motor shaft 8 along an arc length amounting to more than 180°. Formed in plate 24 is a second slot 28 which connects to a part of the channel for the cooling medium formed in wall 2. Plate 24 further has a toothed wheel 20 which is clamped into an opening made for this purpose and which is welded fixedly to the underside of plate 24 and co-acts with an inner toothing 30 (shown in fig. 6) present for this purpose in rotor 10.

Hard-steel plate 24 forms together with the cast aluminium cover part 4 the second cover, wherein inlet channel 6 for the cooling medium is covered by the first slot 26 and wherein a part 22 of the inlet channel connects via an (in the drawing upward directed) opening to a part of the channel for the cooling medium formed in wall 2.

Fig. 4 shows motor shaft 8 with an eccentric which is assembled from first part 15 and a second part 16 separated over an axial distance therefrom, which parts 15, 16 allow passage of the cooling medium and are each provided with blades 29 for transporting the cooling medium. The outer periphery of the first 15 and the second part 16 of the eccentric corresponds with the inner periphery of respectively the first 13 and the second part 14 of the cavity in rotor 10 (fig. 5 and 6).

Fig. 5 and Fig. 6 show rotor 10 with a cylindrical cavity which is assembled from a first part 13 and a second part 14 separated over an axial distance therefrom, in which respectively the first part 15 and the second part 16 of the eccentric are accommodated in engagement with rotor 10 by means of roller bearings (not shown). Arranged in each of the side surfaces 11 of rotor 10 directed toward wall 9 are recesses 33 which extend substantially from an apex of rotor 10 in peripheral direction over half the length of this side surface 11 and which, in the period in which the relevant side surface 11 and wall 9 of the housing form the combustion chamber, forms part of this combustion chamber. Present on the sides of rotor 10 directed toward covers 3, 4 are cavities 31 and 32 which during the rotation bring about a connection between the respective slots 25, 27 and 26, 28 in the respective cover parts 23 and 24. This connection can only be effected during the inlet phase via respectively the first 15 and the second part 16 of the eccentric, wherein the cooling medium is drawn with force by blades 29 of the eccentric from above and below into the space between the first 15 and second parts 16 of the eccentric and the spaces above and below the level of the first 13 and second cavity 14 in rotor 10.

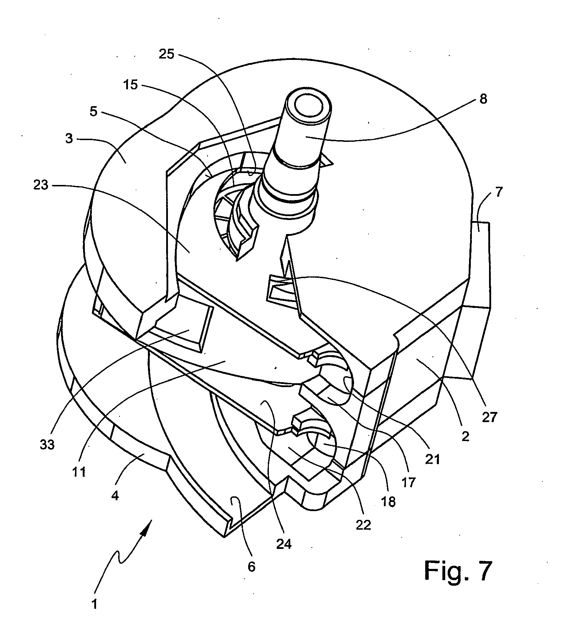

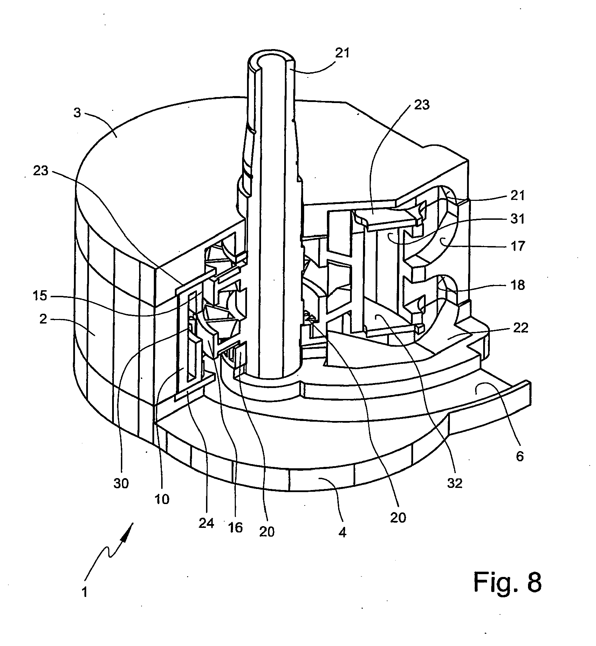

Fig. 7 and Fig. 8 show rotary piston engine 1 in a different perspective in the same phase of rotor 10, wherein a maximum inlet of cooling medium takes place via inlet channels 5, 25, 15, 31, 27, 21, 17 in upper cover 3 and wall 2 and inlet channels 6, 26, 16, 28, 22, 18 in lower cover 4 and wall 2.

Because cooling of rotor 10 and eccentric 15, 16 in a rotary piston engine according to the invention takes place from inside and with a powerful flow of cooling medium, air can be used as cooling medium instead of an air-fuel mixture, so that it is possible to provide a rotary piston engine according to the invention with inlet means for direct admittance of fuel into the chamber, and to thus realize a high efficiency.

## Claims

1. Rotary piston engine (1), comprising
- a housing (2,3, 4) with a wall (2) which is closed at a first end by a first cover (3, 23) and which is closed at an opposite second end by a second cover (4, 24), wherein a chamber is formed by the wall (2), the first (3, 23) and the second cover (4, 24), wherein in a cross-section through the chamber the inner side (9) of the wall has an epitrochoid form,
- a rotor (10) which is rotatable in the chamber and which in a view in axial direction has the form of an equilateral triangle with convex sides (11), wherein the apexes (12) are in sealing contact with the inner side (9) of the wall (2), in which rotor (10) a cylindrical cavity (13; 14) is formed,
- a rotatable motor shaft (8) extending through the housing (2, 3, 4) and the rotor (10) and an eccentric (15; 16) which is fixedly connected to this motor shaft (8) and which is accommodated in the cavity (13; 14) in the rotor-(10) in engagement with the rotor (10),
- wherein in each of the first (3, 23) and the second cover (4, 24) an inlet channel (5,25,31,27,21,17; 6,26,32,22,18) extending via the rotor (10) and the wall (2) and debouching in the chamber is formed for a cooling medium for cooling at least the motor shaft (8), the eccentric (15; 16), the rotor (10) and the housing (2, 3, 4), **characterized in that** the eccentric is assembled from a first part (15) through which the cooling medium can pass and, separated over an axial distance therefrom, a second part (16) through which the cooling medium can pass, and the cylindrical cavity in the rotor (10) is assembled from a first part (13) and a second part (14) separated over an axial distance therefrom, wherein the first (15) and the second part (16) of the eccentric are accommodated in engagement with the rotor (10) in respectively the first (13) and the second part (14) of the cavity in the rotor (10), wherein the outer periphery of the first (15) and the second part (16) of the eccentric corresponds to the inner periphery of respectively the first (13) and the second part (14) of the cavity.

2. Rotary piston engine (1) as claimed in claim 1, **characterized in that** the first (15) and second part (16) of the eccentric are each provided with blades (19) for transporting the cooling medium.

3. Rotary piston engine (1) as claimed in either of the claims 1-2, **characterized in that** the inlet channel in the side directed toward the chamber of respectively the first (3, 23) and the second cover (4, 24) has a slot (25; 26) which extends around the motor shaft (8) over an arc length which amounts to at least 135°.

4. Rotary piston engine (1) as claimed in claim 3, **characterized in that** the arc length amounts to at least 180°.

5. Rotary piston engine (1) as claimed in either of the claims 3-4, **characterized in that** at least one of the first and the second cover is assembled from a first part (3; 4) obtained by casting and a plate-like second part (23; 24) directed toward the chamber, wherein the second part (23; 24) forms the side which is directed toward the chamber and in which the slot (25; 26) is arranged.

6. Rotary piston engine (1) as claimed in claim 5, **characterized in that** the second part (23; 24) is manufactured from a second material that is harder than the first material from which the first part (3; 4) is manufactured.

7. Rotary piston engine (1) as claimed in claim 6, **characterized in that** the first part (3; 4) is manufactured from aluminium and the second part (23; 24) is manufactured from steel.

8. Rotary piston engine (1) as claimed in any of the claims 5-7, wherein the assembled cover (4, 24) is provided with a toothed wheel (20) which co-acts with an inner toothing (30) present for this purpose in the rotor (10),
**characterized in that** the toothed wheel (20) is connected by a welded connection to the second part (24) of the assembled cover (4, 24).

9. Rotary piston engine (1) as claimed in any of the claims 1-8, **characterized in that** it is provided with inlet means for direct admittance of fuel into the chamber.

10. Rotary piston engine (1) as claimed in claim 9, **characterized in that** the cooling medium is air.

11. Rotary piston engine as claimed in either of the claims 9-10, **characterized in that** each of the surfaces of the rotor directed toward the wall has a recess extending substantially from an apex of the rotor in peripheral direction over half the length of this surface.

12. Rotary piston engine as claimed in any of the foregoing claims, **characterized in that** it is coupled to at least a subsequent rotary piston engine according to any of the foregoing claims, wherein the motor shaft is a shared motor shaft extending through the respective housing and the respective rotor of each of the respective rotary piston engines.

## Patentansprüche

1. Kreiskolbenmotor (1), enthaltend
- ein Gehäuse (2, 3, 4) mit einer Wand (2), die an einem ersten Ende durch einen ersten Deckel (3, 23) und an einem gegenüberliegenden zweiten Ende durch einen zweiten Deckel (4, 24) abgeschlossen ist, wobei durch die Wand (2), den ersten (3, 23) und den zweiten Deckel (4, 24) eine Kammer gebildet wird, wobei die Innenseite (9) der Wand in einem Querschnitt durch die Kammer eine Epitrochoideform aufweist,
- ein in der Kammer rotierbarer Läufer (10), der in einer Ansicht in axialer Richtung die Form eines gleichseitigen Dreiecks mit konvexen Seiten (11) aufweist, wobei die Eckpunkte (12) im abdichtendem Kontakt mit der Innenseite (9) der Wand (2) sind, in welchem Läufer (10) eine zylindrische Mulde (13; 14) ausgebildet ist,
- eine sich durch das Gehäuse (2, 3, 4) und den Läufer (10) erstreckende rotierbare Motorwelle (8) und ein fest mit dieser Motorwelle (8) verbundener Exzenter (15; 16), der in der Mulde (13; 14) in dem Läufer (10) in Eingriff mit dem Läufer (10) aufgenommen ist,
- wobei in jedem des ersten (3, 23) und des zweiten Deckels (4, 24) ein sich über den Läufer (10) und die Wand (2) erstreckender und in der Kammer mündender Einlasskanal (5,25,31,27,21,17; 6,26,32,22,18) für ein Kühlmedium zur Kühlung von wenigstens der Motorwelle (8), des Exzenters (15; 16), des Läufers (10) und des Gehäuses (2, 3, 4) ausgebildet ist, **dadurch gekennzeichnet, dass** der Exzenter aus einem für das Kühlmedium durchlässigen ersten Teil (15) und einem über einen axialen Abstand davon getrennten für das Kühlmedium durchlässigen zweiten Teil (16) zusammengesetzt ist, und die zylindrische Mulde in dem Läufer (10) aus einem ersten Teil (13) und einem über einen axialen Abstand davon getrennten zweiten Teil (14) zusammengesetzt ist, wobei der erste (15) und der zweite Teil (16) des Exzenters respektive in dem ersten (13) und dem zweiten Teil (14) der Mulde in dem Läufer (10) in Eingriff mit dem Läufer (10) aufgenommen sind, wobei der Außenumfang des ersten (15) respektive des zweiten Teils (16) des Exzenters mit dem Innenumfang des ersten (13) respektive des zweiten Teils (14) der Mulde korrespondiert.

2. Kreiskolbenmotor (1) nach Anspruch 1, **dadurch gekennzeichnet, dass** der erste (15) und der zweite Teil (16) des Exzenters jeweils mit Schaufeln (19) zum Transportieren des Kühlmediums ausgestattet sind.

3. Kreiskolbenmotor (1) nach einem der Ansprüche 1-2, **dadurch gekennzeichnet, dass** der Einlasskanal in der zu der Kammer zeigenden Seite des respektiven ersten (3, 23) und des zweiten Deckels (4, 24) eine Nut (25; 26) aufweist, die sich um die Motorwelle (8) herum über eine Bogenlänge erstreckt, die mindestens 135° beträgt.

4. Kreiskolbenmotor (1) nach Anspruch 3, **dadurch gekennzeichnet, dass** die Bogenlänge mindestens 180° beträgt.

5. Kreiskolbenmotor (1) nach einem der Ansprüche 3-4, **dadurch gekennzeichnet, dass** mindestens einer des ersten und des zweiten Deckels aus einem durch Gießen erhaltenen ersten Teil (3; 4) und einem zu der Kammer hin gerichteten tafelförmigen zweiten Teil (23; 24) zusammengesetzt ist, wobei der zweite Teil (23; 24) die zu der Kammer hin gerichtete Seite bildet, in der die Nut (25; 26) angebracht ist.

6. Kreiskolbenmotor (1) nach Anspruch 5, **dadurch gekennzeichnet, dass** der zweite Teil (23; 24) aus einem zweiten Material hergestellt ist, das härter ist als das erste Material, aus dem der erste Teil (3; 4) hergestellt ist.

7. Kreiskolbenmotor (1) nach Anspruch 6, **dadurch gekennzeichnet, dass** der erste Teil (3; 4) aus Aluminium hergestellt ist und der zweite Teil (23; 24) aus Stahl hergestellt ist.

8. Kreiskolbenmotor (1) nach einem der Ansprüche 5-7, wobei der zusammengesetzte Deckel (4, 24) mit einem Zahnrad ausgestattet ist (20), das mit einer dazu in dem Läufer (10) vorhandenen Innenverzahnung (30) zusammenarbeitet, **dadurch gekennzeichnet, dass** das Zahnrad (20) durch eine Schweißverbindung mit dem zweiten Teil (24) des zusammengesetzten Deckels (4, 24) verbunden ist.

9. Kreiskolbenmotor (1) nach einem der Ansprüche 1-8, **dadurch gekennzeichnet, dass** dieser mit Einlassmitteln für das direkte Einlassen von Kraftstoff in die Kammer ausgestattet ist.

10. Kreiskolbenmotor (1) nach Anspruch 9, **dadurch gekennzeichnet, dass** das Kühlmedium Luft ist.

11. Kreiskolbenmotor nach einem der Ansprüche 9-10, **dadurch gekennzeichnet, dass** jede der zu der Wand hin gerichteten Flächen des Läufers eine Aussparung aufweist, die sich im Wesentlichen von einer Ecke des Läufers in Umfangsrichtung über die halbe Länge dieser Fläche erstreckt.

12. Kreiskolbenmotor nach einem der vorhergehenden Ansprüche, **dadurch gekennzeichnet, dass** dieser mit mindestens einem folgenden Kreiskolbenmotor nach einem der vorhergehenden Ansprüche verbunden ist, wobei die Motorwelle eine gemeinsame Motorwelle ist, die sich durch das respektive Gehäuse und den respektiven Läufer jedes der respektiven Kreiskolbenmotoren erstreckt.

## Revendications

1. Moteur à pistons rotatifs (1), comprenant:
- un boîtier (2, 3, 4) comprenant une paroi (2) qui est fermée à une première extrémité par un premier couvercle (3, 23), et qui est fermée à une deuxième extrémité opposée par un deuxième couvercle (4, 24), dans lequel une chambre est formée par la paroi (2), le premier couvercle (3, 23) et le deuxième couvercle (4, 24), dans lequel, dans une coupe transversale à travers la chambre, le côté intérieur (9) de la paroi présente une forme épi-trochoïde,
- un rotor (10) qui peut tourner dans la chambre et qui, dans une vue dans une direction axiale, a la forme d'un triangle équilatéral présentant des côtés convexes (11), dans lequel les sommets (12) sont en contact étanche avec le côté intérieur (9) de la paroi (2), rotor (10) dans lequel une cavité cylindrique (13; 14) est formée,
- un arbre de moteur rotatif (8) qui s'étend à travers le boîtier (2, 3, 4) et le rotor (10) et un excentrique (15; 16) qui est connecté fixement à cet arbre de moteur (8) et qui est reçu dans la cavité (13; 14) dans le rotor (10) en engagement avec le rotor (10),
- dans lequel un canal d'entrée (5, 25, 31, 27, 21, 17; 6, 26, 32, 22, 18) qui s'étend par l'intermédiaire du rotor (10) et de la paroi (2) et qui débouche dans la chambre est formé à la fois dans le premier couvercle (3, 23) et dans le deuxième couvercle (4, 24) pour un agent de refroidissement destiné à refroidir au moins l'arbre de moteur (8), l'excentrique (15; 16), le rotor (10) et le boîtier (2, 3, 4), **caractérisé en ce que** l'excentrique est assemblé à partir d'une première partie (15) à travers laquelle l'agent de refroidissement peut passer et, séparée de celle-ci par une distance axiale, d'une deuxième partie (16) à travers laquelle l'agent de refroidissement peut passer, et la cavité cylindrique dans le rotor (10) est assemblée à partir d'une première partie (13) et d'une deuxième partie (14) qui est séparée de celle-ci par une distance axiale, dans lequel la première partie (15) et la deuxième partie (16) de l'excentrique sont reçues en engagement avec le rotor (10) dans la première partie (13) et la deuxième partie (14), respectivement, de la cavité dans le rotor (10), dans lequel la périphérie extérieure de la première partie (15) et de la deuxième partie (16) de l'excentrique correspond à la périphérie intérieure de la première partie (13) et de la deuxième partie (14), respectivement, de la cavité.

2. Moteur à pistons rotatifs (1) selon la revendication 1, **caractérisé en ce que** les première (15) et deuxième (16) parties de l'excentrique sont chacune pourvues d'aubes (19) pour transporter l'agent de refroidissement.

3. Moteur à pistons rotatifs (1) selon l'une ou l'autre des revendications 1 et 2, **caractérisé en ce que** le canal d'entrée dans le côté orienté en direction de la chambre du premier couvercle (3, 23) et du deuxième couvercle (4, 24), respectivement, comporte une fente (25; 26) qui s'étend autour de l'arbre de moteur (8) sur une longueur d'arc qui est égale à au moins 135°.

4. Moteur à pistons rotatifs (1) selon la revendication 3, **caractérisé en ce que** la longueur d'arc est égale à au moins 180°.

5. Moteur à pistons rotatifs (1) selon l'une ou l'autre des revendications 3 et 4, **caractérisé en ce qu'**au moins un des premier et deuxième couvercles est assemblé à partir d'une première partie (3; 4) obtenue par moulage et d'une deuxième partie en forme de plaque (23; 24) orientée en direction de la chambre, dans lequel la deuxième partie (23; 24) forme le côté qui est orienté en direction de la chambre et dans lequel la fente (25; 26) est formée.

6. Moteur à pistons rotatifs (1) selon la revendication 5, **caractérisé en ce que** la deuxième partie (23; 24) est fabriquée à partir d'un deuxième matériau qui est plus dur que le premier matériau à partir duquel la première partie (3; 4) est fabriquée.

7. Moteur à pistons rotatifs (1) selon la revendication 6, **caractérisé en ce que** la première partie (3; 4) est fabriquée à partir d'aluminium, et la deuxième partie (23; 24) est fabriquée à partir d'acier.

8. Moteur à pistons rotatifs (1) selon l'une quelconque des revendications 5 à 7, dans lequel le couvercle assemblé (4, 24) est pourvu d'une roue dentée (20) qui coopère avec une denture intérieure (30) présente à cette fin dans le rotor (10), **caractérisé en ce que** la roue dentée (20) est connectée par une connexion soudée à la deuxième partie (24) du couvercle assemblé (4, 24).

9. Moteur à pistons rotatifs (1) selon l'une quelconque des revendications 1 à 8, **caractérisé en ce que** le moteur comprend des moyens d'entrée pour l'admission directe de combustible dans la chambre.

10. Moteur à pistons rotatifs (1) selon la revendication 9, **caractérisé en ce que** l'agent de refroidissement est l'air.

11. Moteur à pistons rotatifs selon l'une ou l'autre des revendications 9 et 10, **caractérisé en ce que** chacune des surfaces du rotor orientées en direction de la paroi comporte un évidement qui s'étend essentiellement à partir d'un sommet du rotor dans la direction périphérique sur la moitié de la longueur de cette surface.

12. Moteur à pistons rotatifs selon l'une quelconque des revendications précédentes, **caractérisé en ce que** le moteur est couplé à au moins un moteur à pistons rotatifs suivant selon l'une quelconque des revendications précédentes, dans lequel l'arbre de moteur est un arbre de moteur partagé qui s'étend à travers le boîtier respectif et le rotor respectif de chacun des moteurs à pistons rotatifs respectifs.
